# EUROPEAN PATENT APPLICATION

(11) **EP 4 579 905 A1**
(43) Date of publication of application: **02.07.2025**
(21) Application number: 22960095.2
(22) Date of filing: 29.09.2022
(51) Int. Cl.: H01M 50/188, H01M 50/342, H01M 50/375

(54) **ELECTROCHEMICAL APPARATUS AND ELECTRIC DEVICE**

(71) Applicant: Ningde Amperex Technology Limited, Ningde, Fujian 352100 (CN)
(72) Inventor: ZHANG, Guowen, Ningde, Fujian 352100 (CN)
(74) Representative: Icosa
(86) International application number: PCT/CN2022/122811
(87) International publication number: WO 2024/065458

(57) **Abstract**

An electrochemical apparatus (100) includes a housing (10), a conductive member (20), an electrode assembly (30), and an insulating member (40). The housing (10) has a first wall (11), and the first wall (11) is provided with a first through hole (111). The conductive member (20) covers the first through hole (111). The electrode assembly (30) is accommodated in the housing (10) and is electrically connected to the conductive member (20). The insulating member (40) is arranged between the conductive member (20) and the first wall (11), the insulating member (40) has a second through hole (41), and along a first direction (X), at least a part of a projection of the conductive member (20) is located within both the first through hole (111) and a second through hole (41). A surface of the first wall (11) facing the conductive member (20) and/or a surface of the conductive member (20) facing the first wall (11) is provided with a convex portion (50).

## Description

### TECHNICAL FIELD

This application relates to the field of battery technologies, and specifically to an electrochemical apparatus and an electric device.

### BACKGROUND

With the development of new energy technologies, the application of energy storage devices is becoming more widespread, such as in mobile phones, notebook computers, electric bicycles, electric vehicles, electric airplanes, electric ships, electric toy cars, electric toy ships, electric toy airplanes, and electric tools.

As energy storage devices, electrochemical apparatuses generally output electrical energy through electrochemical reactions between electrode assemblies and electrolytes. For electrochemical apparatuses, safety issues are one of the main concerns for users. Therefore, how to improve the safety of electrochemical apparatuses is an urgent technical problem to be solved.

### SUMMARY

This application provides an electrochemical apparatus and an electric device, to improve safety performance of the electrochemical apparatus.

According to a first aspect, this application provides an electrochemical apparatus, including a housing, a conductive member, an electrode assembly, and an insulating member. The housing has a first wall, the first wall is provided with a first through hole, the conductive member covers the first through hole, the electrode assembly is accommodated in the housing, and the conductive member is electrically connected to the electrode assembly to lead out a polarity of the electrode assembly. The insulating member is arranged between the conductive member and the first wall to insulate the conductive member from the housing. The insulating member has a second through hole, and along a first direction, at least a part of a projection of the conductive member is located within both the first through hole and the second through hole, where the first direction is a thickness direction of the first wall. A surface of the first wall facing the conductive member and/or a surface of the conductive member facing the first wall is provided with a convex portion.

In the foregoing technical solution, the convex portion is provided on the surface of the conductive member facing the first wall and/or the surface of the first wall facing the conductive member, so that when internal pressure of the electrochemical apparatus reaches a threshold, the convex portion can destroy the insulating member that acts as an insulating seal, and support between the first wall and the conductive member to enable a channel connecting the inside and outside of the housing to be formed between the conductive member and the first wall, and gas inside the housing can be discharged from the channel to the outside of the housing, which achieves the pressure relief of the electrochemical apparatus, reduces the risk of safety accidents caused by thermal runaway of the electrochemical apparatus, and improves safety performance of the electrochemical apparatus. The foregoing solution can achieve pressure relief when the electrochemical apparatus is in thermal runaway without providing a pressure relief mechanism (for example, a common explosion-proof valve or notching on the housing) on the housing. Therefore, the integrity of the structure of the housing is not compromised, so as to ensure the structural strength of the housing, further improving the safety performance of the electrochemical apparatus, while also increasing the space utilization rate of the electrochemical apparatus and increasing the energy density.

In some embodiments, the convex portion is arranged on a surface of the conductive member facing the first wall. In the foregoing technical solution, as the conductive member is formed separately and generally has a sheet-like structure (local protrusions or depressions are not excluded), the structure is relatively simple, and the processing convenience and cost of providing a convex portion on the surface of the conductive member facing the first wall are relatively low, which in turn reduces the overall cost of the electrochemical apparatus.

In some embodiments, the conductive member and the convex portion is integrally formed. In the foregoing technical solution, the integral formation of the conductive member and the convex portion can be easily and conveniently achieved through manufacturing methods such as stamping, milling, and casting, and the overall structure formed by the conductive member and the convex portion has higher strength.

In some embodiments, the electrochemical apparatus includes a plurality of convex portions, where the plurality of convex portions are spaced apart from each other around the first through hole. In the foregoing technical solution, the plurality of convex portions are spaced apart from each other around the first through hole, so when the internal pressure of the electrochemical apparatus reaches a threshold, the plurality of convex portions can jointly support the conductive member and the first wall, so that the conductive member and the first wall are more evenly stressed, which enhances the stability of the formed channel, and facilitates quick and stable pressure relief. It is preferable that the plurality of convex portions are evenly spaced apart from each other, so that the conductive member and the first wall are more evenly stressed, and the formed pressure relief channel is more evenly distributed, which improves the safety of the pressure relief process.

In some embodiments, an end of the convex portion close to the first through hole extends beyond a wall of the second through hole, and an end of the convex portion far away from the first through hole extends beyond an outer edge of the insulating member or is flush with the outer edge of the insulating member. In the foregoing technical solution, the end of the convex portion close to the first through hole extends beyond the wall of the second through hole, and the end of the convex portion far away from the first through hole extends beyond the outer edge of the insulating member or is flush with the outer edge of the insulating member, so that after the convex portion damages the insulating member, a channel communicating the inside and outside of the housing along a radial direction of the first through hole is formed between the conductive member and the first wall, which facilitates quicker and smoother pressure relief and reduces the risk of safety accidents caused by thermal runaway of the electrochemical apparatus.

In some embodiments, the electrode assembly includes a first tab and a second tab with opposite polarities, where the first tab is electrically connected to the conductive member, and the second tab is electrically connected to the housing; and the convex portion is configured to form a channel, communicating the inside and outside of the housing, between the conductive member and the first wall after the insulating member melts. In the foregoing technical solution, the first tab is electrically connected to the conductive member, and the second tab is electrically connected to the housing, so that the conductive member and the housing respectively form two electrodes of the electrochemical apparatus with opposite polarities. When the internal pressure of the electrochemical apparatus increases to a threshold, the convex portion damages the insulating member, causing a short circuit in the electrochemical apparatus. The temperature of the short-circuited electrochemical apparatus rises rapidly, and the high temperature causes the insulating member to melt. The locally melted insulating member flows to two sides of the convex portion under the action of the convex portion and the gas inside the housing, to form a channel with a larger cross-section for pressure relief, which improves the pressure relief efficiency during thermal runaway of the electrochemical apparatus. Meanwhile, the top of the convex portion is inevitably uneven at the microscopic level. As long as a higher part of the top of the convex portion becomes in contact with the housing, a local short circuit and heat release can occur, and in turn may cause the insulating member around the convex portion to melt before the entire insulating member is completely damaged by the convex portion, which accelerates the formation of the pressure relief channel, improves the sensitivity of the electrochemical apparatus to abnormal increases in the internal pressure, reduces the risk of safety accidents caused by thermal runaway of the electrochemical apparatus, and improves the safety performance of the electrochemical apparatus. According to different battery design requirements, the main effect of forming a pressure relief channel can be achieved by causing the insulating member around the convex portion to melt through a local short circuit. For example, when the insulating member is made of a material with high tear resistance and/or the top shape of the convex portion is not sharp, the pressure required to damage the insulating member by the convex portion alone is too high to ensure safety. In this case, the convex portion causes a local short circuit between the conductive member and the housing to release heat, so that the electrochemical apparatus can form a pressure relief channel under a relatively low internal pressure, thereby achieving safe pressure relief.

In some embodiments, the convex portion is formed with a groove on a surface of the insulating member along the first direction to form a weak portion. The convex portion is inserted into the groove and abuts against the weak portion, where the convex portion is configured to break the weak portion when internal pressure of the housing reaches a threshold, so as to short-circuit the conductive member and the housing. In the foregoing technical solution, after the convex portion breaks the insulating member, the convex portion supports between the conductive member and the first wall, the conductive member and the housing are short-circuited through the convex portion, the temperature of the electrochemical apparatus rises rapidly, and the high temperature causes the insulating member to melt. Thus, the convex portion supported between the conductive member and the first wall can form a channel, communicating the inside and outside of the housing, between the conductive member and the first wall, or the convex portion allows the melted insulating member to be squeezed out from between the conductive member and the first wall by the gas inside the electrochemical apparatus, so that a channel between the conductive member and the first wall is formed, and the pressure is relieved through the channel, which reduces the risk of safety accidents caused by thermal runaway of the electrochemical apparatus, and improves the safety performance of the electrochemical apparatus. When the internal pressure of the housing reaches a threshold, the convex portion breaks the weak portion, and the conductive member and the housing short-circuit through the convex portion so as to achieve pressure relief of the electrochemical apparatus. This can achieve pressure relief during thermal runaway of the electrochemical apparatus without the need to provide a pressure relief mechanism on the housing, thereby not compromising the integrity of the structure of the housing and ensuring the structural strength of the housing. Arrangement of the weak portion makes the insulating member more easily broken by the convex portion, and enables timely short-circuiting of the electrochemical apparatus, so as to achieve timely pressure relief.

In some embodiments, thickness of the weak portion is D, satisfing 0.01 mm ≤ D ≤ 0.50 mm. In the foregoing technical solution, if the thickness D of the weak portion is too small, for example, less than 0.01 mm, the weak portion is easily damaged by the convex portion or the convex portion easily causes a local short circuit between the conductive member and the housing body, making the electrochemical apparatus too sensitive to internal pressure changes, resulting in performance waste; if the thickness D of the weak portion is too large, for example, greater than 0.50 mm, the insulating member between the top of the convex portion and the first wall of the housing is too thick under normal conditions of the electrochemical apparatus, and the convex portion may require extremely high pressure to completely damage the insulating member or achieve a local short circuit, making the pressure threshold too high, which is inconducive to ensuring the safety of the electrochemical apparatus. The thickness D of the weak portion satisfing 0.01 mm ≤ D ≤ 0.50 mm ensures that the weak portion has good insulating performance and is also easily broken by the convex portion, thereby ensuring timely pressure relief when the internal pressure of the electrochemical apparatus is too high.

In some embodiments, the convex portion extends in a straight line or a curve on a surface of the first wall facing the conductive member and/or a surface of the conductive member facing the first wall, and a cross section of the convex portion is triangular. In the foregoing technical solution, the cross section of the convex portion is triangular, making the top of the convex portion sharper and easier to break the insulating member. According to design needs, in other embodiments, the cross section of the convex portion may alternatively be other shapes, such as a curved triangle or an ellipse.

In some embodiments, height of the cross section of the convex portion is H, and width of the cross section of the convex portion is L, satisfing 1/5 ≤ H/L ≤ 3. In the foregoing technical solution, if H/L is too small, for example, less than 1/5, in a case in which the cross section of the convex portion is triangular, the triangle as a whole is too flat and has a low sharpness, it is difficult for the convex portion to pierce the insulating member, thus it is hard to form a smooth pressure relief channel; and if H/L is too large, for example, greater than 3, the cross section of the convex portion is too sharp, and the convex portion can pierce the insulating member at a relatively low pressure; and due to the tip discharge effect, the convex portion also more easily causes a local short circuit between the conductive member and the first wall, resulting in pressure relief of the electrochemical apparatus at a relatively low internal pressure and causing performance waste. 1/5 ≤ H/L ≤ 3 ensures that under reasonable internal pressure of the electrochemical apparatus, after the convex portion damages the insulating member, the channel formed between the first wall and the conductive member can meet the pressure relief requirements of the electrochemical apparatus, which enables the electrochemical apparatus to relieve pressure timely and quickly, and reduces the risk of safety accidents caused by thermal runaway of the electrochemical apparatus.

In some embodiments, height of the convex portion is H, and thickness of the insulating member is K, satisfing 0.01 mm ≤ H < K. In the foregoing technical solution, the height H of the convex portion and the thickness K of the insulating member meet 0.01 mm ≤ H < K, so that the insulating member has good insulating performance. Moreover, after the convex portion breaks the insulating member, the convex portion can support the first wall and the conductive member in a thickness direction of the first wall, so that a channel with a larger cross-sectional area for pressure relief is formed between the first wall and the conductive member to meet the pressure relief requirements.

In some embodiments, the conductive member may alternatively cover the first through hole from a side of the first wall facing the electrode assembly. In the foregoing technical solution, the conductive member covers the first through hole from the side of the first wall facing the electrode assembly, which can prevent the conductive member from occupying the internal space of the housing, and increase the energy density.

According to a second aspect, an embodiment of this application provides an electric device including the electrochemical apparatus according to any one of the embodiments of the first aspect. In the foregoing technical solution, the electrochemical apparatus provided in any embodiment of the first aspect has better safety, and can improve the electrical safety of the electric device equipped with the electrochemical apparatus.

### BRIEF DESCRIPTION OF DRAWINGS

To make the technical solutions in some embodiments of this application clearer, the accompanying drawings to be used in these embodiments will be briefly described below. It should be understood that the following drawings show only some embodiments of this application and should not be considered as limiting the scope.
FIG. 1 is a schematic structural diagram of an electrochemical apparatus according to some embodiments of this application;
FIG. 2 is a schematic structural diagram of an electrochemical apparatus according to some other embodiments of this application;
FIG. 3 is a schematic diagram of a housing, conductive member, and insulating member after assembly according to some embodiments of this application;
FIG. 4 is a schematic diagram of a housing, conductive member, and insulating member after assembly according to some other embodiments of this application;
FIG. 5 is a schematic diagram of a housing, conductive member, and insulating member after assembly according to still some other embodiments of this application;
FIG. 6 is a schematic diagram of a housing, conductive member, and insulating member after assembly according to yet some other embodiments of this application;
FIG. 7 is a schematic diagram of a housing, conductive member, and insulating member after assembly according to still yet some other embodiments of this application;
FIG. 8 is a schematic diagram of a housing, conductive member, and insulating member after assembly according to further some other embodiments of this application;
FIG. 9 is a schematic diagram of a housing, conductive member, and insulating member after assembly according to still further some other embodiments of this application;
FIG. 10 is a schematic diagram of a first wall, conductive member, and insulating member before assembly according to some embodiments of this application;
FIG. 11 is a schematic diagram of a conductive member and body portion after connection according to some embodiments of this application;
FIG. 12 is a schematic diagram of a conductive member and body portion after connection according to some other embodiments of this application;
FIG. 13 is a schematic diagram of a conductive member and the body portion after connection according to still some other embodiments of this application;
FIG. 14 is a schematic diagram of a first wall, conductive member, and insulating member after assembly according to some embodiments of this application;
FIG. 15 is a schematic diagram of a first wall, conductive member, and insulating member after assembly according to some other embodiments of this application;
FIG. 16 is a schematic diagram of a first wall, conductive member, and insulating member after assembly according to some embodiments of this application;
FIG. 17 is a cross-sectional view along direction Q-Q in FIG. 16;
FIG. 18 is an enlarged view of position A in FIG. 17;
FIG. 19 is a schematic diagram of a conductive member and body portion after connection according to yet still some other embodiments of this application; and
FIG. 20 is an enlarged view of position B in FIG. 17.

Reference signs: 100: electrochemical apparatus; 10: housing; 11: first wall; 111: first through hole; 12: housing body; 121: opening; 20: conductive member; 30: electrode assembly; 31: first tab; 32: second tab; 40: insulating member; 41: second through hole; 42: groove; 43: weak portion; 50: convex portion; 60: body portion; and X: first direction.

### DETAILED DESCRIPTION

To make the objectives, technical solutions, and advantages of some embodiments of this application clearer, the following clearly and completely describes the technical solutions in some embodiments of this application with reference to the accompanying drawings in some embodiments of this application. Apparently, the described embodiments are some but not all embodiments of this application. Generally, the components in some embodiments of this application as described and illustrated in the accompanying drawings herein can be arranged and designed in a variety of configurations.

Therefore, the following detailed description of some embodiments of this application as provided in the accompanying drawings is not intended to limit the protection scope of this application but merely to represent selected embodiments of this application.

It should be noted that in absence of conflicts, some embodiments and features in some embodiments in this application may be combined with each other.

It should be noted that similar reference numerals and letters indicate similar items in the following drawings, and therefore once an item is defined in one drawing, it does not need to be further defined or explained in the subsequent drawings.

In the description of some embodiments of this application, it should be noted that the orientations or positional relationships as indicated are orientations or positional relationships based on the accompanying drawings, or conventional orientations or positional relationships of products of this application in use, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore shall not be construed as any limitations on this application. In addition, the terms "first", "second", "third", and the like are merely intended for distinguishing purposes and shall not be understood as any indication or implication of relative importance.

Currently, from the perspective of market development, the application of electrochemical apparatuses is becoming increasingly widespread. Electrochemical apparatuses have been widely used in electric bicycles, electric motorcycles, electric vehicles, and other electric transportation tools, as well as in electric tools, drones, energy storage devices, and other fields. With the continuous expansion of the application fields of electrochemical apparatuses, the market demand is also continuously increasing.

The development of electrochemical apparatuses needs to consider multiple design factors, such as energy density, cycle life, discharge capacity, charge-discharge rate, and other performance parameters. Additionally, the safety of electrochemical apparatuses also needs to be considered.

For electrochemical apparatuses, the main safety hazards come from the charging and discharging processes. When an abnormal reaction occurs inside the electrochemical apparatus, a large amount of gas is generated. To effectively avoid unnecessary losses, arrangement of a pressure relief mechanism in the electrochemical apparatus is one of the protective measures for the electrochemical apparatus.

The pressure relief mechanism refers to an element or component that is damaged to relieve internal pressure when the internal pressure or temperature of the electrochemical apparatus reaches a threshold. Design of the threshold varies with different design requirements. The threshold may depend on one or several materials in the positive electrode plate, negative electrode plate, electrolyte, and separator of the electrochemical apparatus. The pressure relief mechanism may take the form such as an explosion-proof valve, an explosion-proof sheet, a gas valve, a pressure relief valve, or a safety valve, and may specifically use a pressure-sensitive or temperature-sensitive element or structure. When the internal pressure or temperature of the electrochemical apparatus reaches a threshold, the pressure relief mechanism performs an action or the structure of the pressure relief mechanism is damaged, so as to form an opening or channel for relieving internal pressure or temperature.

In this application, "actuation" means that the pressure relief mechanism generates an action or is activated to a certain state, so that the internal pressure and temperature of the electrochemical apparatus can be relieved. The action generated by the pressure relief mechanism may include but is not limited to, at least part of the pressure relief mechanism cracking, breaking, being torn, or opening. When the pressure relief mechanism is actuated, the high-temperature and high-pressure substances inside the electrochemical apparatus are discharged from the actuated part as emissions. In this way, the electrochemical apparatus can relieve pressure and temperature under controllable pressure or temperature, thereby avoiding potential more severe accidents such as explosions.

The emissions from the electrochemical apparatus mentioned in this application include but are not limited to electrolyte, dissolved or split positive and negative electrode plates, fragments of the separator, high-temperature and high-pressure gases generated in the reaction, and flames.

The electrochemical apparatus includes a housing and an electrode assembly arranged inside the housing. The pressure relief mechanism is a weak region or pressure relief valve provided on the housing. When the internal pressure of the electrochemical apparatus reaches a threshold, the pressure relief mechanism is damaged to release the internal pressure of the electrochemical apparatus. If a weak region or pressure relief valve is provided on the housing, it will increase the processing technology of the housing, and the process of providing a weak region and pressure relief valve on the housing is more difficult. Arrangement of a weak region or pressure relief valve on the housing will also compromise the integrity of the structure of the housing and affect the strength of the overall structure of the housing, thereby reducing the safety of the electrochemical apparatus. Moreover, arrangement of a pressure relief valve will occupy the internal space of the housing body of the electrochemical apparatus, which reduces the space utilization rate and energy density.

Based on the preceding considerations, to alleviate the problem that safety of the electrochemical apparatus is reduced due to the formation of a weak portion on the housing that compromises the integrity of the structure of the housing and affects the strength of the overall structure of the housing, an embodiment of this application provides an electrochemical apparatus. The electrochemical apparatus includes a housing, a conductive member, an electrode assembly, and an insulating member. The housing has a first wall, where the first wall is provided with a first through hole. The conductive member covers the first through hole. The electrode assembly is accommodated in the housing. The conductive member is electrically connected to the electrode assembly to lead out one polarity of the electrode assembly. The insulating member is arranged between the conductive member and the first wall to insulate the conductive member from the housing, the insulating member has a second through hole, and along a first direction, at least a part of a projection of the conductive member is located within both the first through hole and the second through hole, where the first direction is a thickness direction of the first wall. A surface of the first wall facing the conductive member and/or a surface of the conductive member facing the first wall is provided with a convex portion.

The convex portion is provided on the surface of the conductive member facing the first wall and/or the surface of the first wall facing the conductive member, so that when the internal pressure of the electrochemical apparatus reaches a threshold, the convex portion can damage the insulating member and support between the first wall and the conductive member, to form a channel between the conductive member and the first wall for communicating the inside and outside of the housing. In this way, the gas inside the housing can be discharged to the outside of the housing through the channel, which achieves pressure relief of the electrochemical apparatus, reduces the risk of safety accidents caused by thermal runaway of the electrochemical apparatus, and improves the safety performance of the electrochemical apparatus. The foregoing solution can achieve pressure relief during thermal runaway of the electrochemical apparatus without the need to provide a pressure relief mechanism on the housing. Therefore, the integrity of the housing structure may not be compromised, and the structural strength of the housing is ensured, which further improves the safety performance of the electrochemical apparatus.

The electrochemical apparatus disclosed in this embodiment of this application can be used but is not limited to electric two-wheelers, electric tools, drones, energy storage devices, and other electric devices. An electrochemical apparatus with the working conditions of this application can also be used as the power system of electric devices, which is conducive to improving the charge-discharge safety of the power system and the electrical safety of the electric devices.

An embodiment of this application provides an electric device using the electrochemical apparatus as a power source. The electric device may be but is not limited to electronic devices, electric tools, electric transportation tools, drones, and energy storage devices. The electronic device may include a mobile phone, a tablet computer, a notebook computer, or the like, the electric tool may include an electric drill, an electric saw, or the like, and the electric transportation tool may include an electric vehicle, an electric motorcycle, an electric bicycle, or the like.

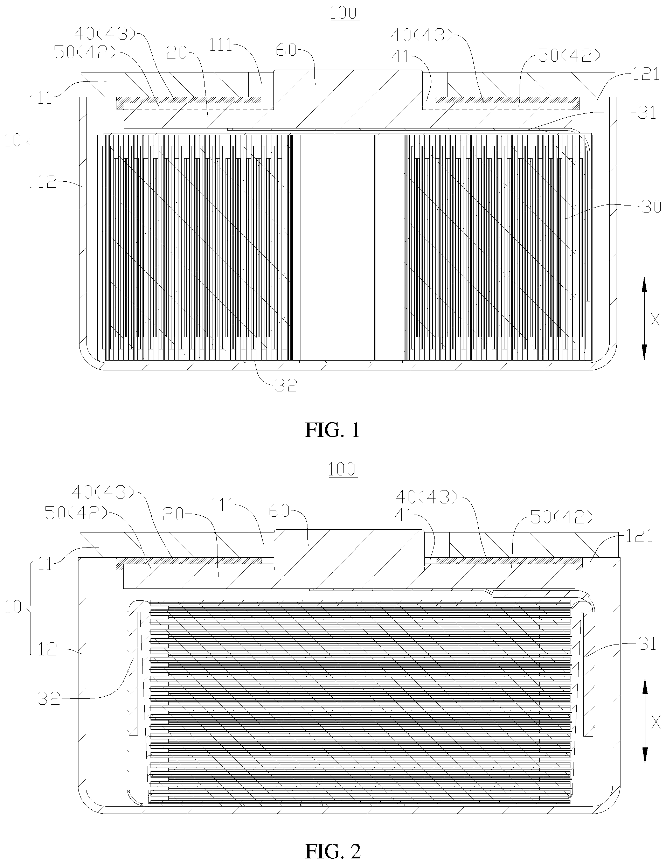

As shown in FIGs. 1 and 2, an embodiment of this application provides an electrochemical apparatus 100. The electrochemical apparatus 100 includes a housing 10, a conductive member 20, an electrode assembly 30, and an insulating member 40. The housing 10 has a first wall 11, and the first wall 11 is provided with a first through hole 111. The conductive member 20 covers the first through hole 111. The electrode assembly 30 is accommodated in the housing 10, and the conductive member 20 is electrically connected to the electrode assembly 30 to lead out one polarity of the electrode assembly 30. The insulating member 40 is arranged between the conductive member 20 and the first wall 11 to insulate the conductive member 20 from the housing 10, and the insulating member 40 has a second through hole 41. Along a first direction, at least a part of a projection of the conductive member 20 is located within both the first through hole 111 and the second through hole 41, where the first direction X is a thickness direction of the first wall. A surface of the first wall 11 facing the conductive member 20 and/or a surface of the conductive member 20 facing the first wall 11 is provided with a convex portion 50.

Still referring to FIGs. 1 and 2, the housing 10 forms an accommodating space for accommodating the electrode assembly 30. The housing 10 includes the first wall 11 and a housing body 12, where the housing body 12 has an opening 121, and the first wall 11 covers the opening 121 of the housing body 12.

Along the first direction X, the conductive member 20, the insulating member 40, and the first wall 11 are stacked, and the insulating member 40 is sandwiched between the conductive member 20 and the first wall 11 to insulate the conductive member 20 from the first wall 11. The first through hole 111 and the second through hole 41 communicate with each other along the first direction X. The conductive member 20 covers the first through hole 111 on a side of the insulating member 40 facing away from the first wall 11. The first direction is parallel to the first direction X.

The first through hole 111 and the second through hole 41 may have various shapes, for example, the first through hole 111 and the second through hole 41 may be square holes, rectangular holes, round holes, or the like. The first through hole 111 and the second through hole 41 may have the same or different shapes. In this embodiment, the first through hole 111 and the second through hole 41 are both round holes, and the first through hole 111 and the second through hole 41 are coaxially arranged.

In an embodiment in which the first through hole 111 and the second through hole 41 are both round holes, the first through hole 111 and the second through hole 41 may have the same or different diameters. FIGs. 1 and 2 show a preferred case in which the second through hole 41 and the first through hole 111 are coaxially arranged, and the diameter of the second through hole 41 is greater than the diameter of the first through hole 111.

In some embodiments, the housing 10 may include one first wall 11, and the housing body 12 has one opening 121, and the first wall 11 covers the opening 121. In other embodiments, the housing 10 may include two first walls 11 arranged oppositely, the housing body 12 has two openings 121, the two openings 121 may be located at opposite ends of the housing body 12, and each first wall 11 is configured to cover one opening 121. FIGs. 1 and 2 show a case in which the housing 10 includes one first wall 11.

The electrode assembly 30 is composed of a positive electrode plate (not shown in the figure), a negative electrode plate (not shown in the figure), and a separator (not shown in the figure). The electrochemical apparatus 100 mainly relies on migration of metal ions between the positive electrode plate and the negative electrode plate to work. The positive electrode plate includes a positive electrode current collector and a positive electrode active substance layer, where the positive electrode active substance layer is applied on a surface of the positive electrode current collector. In some embodiments, the positive electrode current collector also has a portion that is not coated with the positive electrode active substance layer, and the positive electrode current collector not coated with the positive electrode active substance layer protrudes from the positive electrode current collector coated with the positive electrode active substance layer. The positive electrode current collector not coated with the positive electrode active substance layer serves as a positive electrode tab. In some other embodiments, the positive electrode tab may alternatively be a structure that is separately arranged from and electrically connected to the positive electrode current collector. The electrochemical apparatus 100 being a lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer, where the negative electrode active substance layer is applied on a surface of the negative electrode current collector. In some embodiments, the negative electrode current collector also has a portion that is not coated with the negative electrode active substance layer, and the negative electrode current collector not coated with the negative electrode active substance layer protrudes from the negative electrode current collector coated with the negative electrode active substance layer. The negative electrode current collector not coated with the negative electrode active substance layer serves as a negative electrode tab. In some other embodiments, the negative electrode tab may alternatively be a structure that is separately arranged from and electrically connected to the negative electrode current collector. The negative electrode current collector may be made of copper, and the negative electrode active substance may be a common negative active material containing carbon and/or silicon, such as natural graphite, activated carbon, hard carbon, artificial graphite, or a carbon-silicon compound. To allow a large current to pass through without any fusing, a plurality of positive electrode tabs are provided and stacked together, and a plurality of negative electrode tabs are provided and stacked together. The positive electrode tab and the negative electrode tab are respectively a first tab 31 and a second tab 32 mentioned later.

The positive electrode tab and the negative electrode tab may extend from the same end of the electrode assembly 30, or may extend from two opposite ends of the electrode assembly 30. FIGs. 1 and 2 both show a case in which the positive electrode tab and the negative electrode tab extend from two opposite ends of the electrode assembly 30. In FIG. 1, the positive electrode tab and the negative electrode tab extend from the electrode assembly 30 along the first direction X, and in FIG. 2, the positive electrode tab and the negative electrode tab extend from the electrode assembly 30 in a direction perpendicular to the first direction X.

One of the positive electrode tab and the negative electrode tab is electrically connected to one conductive member 20 to achieve electrical connection between the conductive member 20 and the electrode assembly 30.

The separator may be made of PP (polypropylene, polypropylene), PE (polyethylene, polyethylene), or the like. In addition, the electrode assembly 30 may be a wound structure or may be a stacked structure, but the embodiments of this application are not limited thereto.

The electrochemical apparatus 100 may include one conductive member 20 or two conductive members 20.

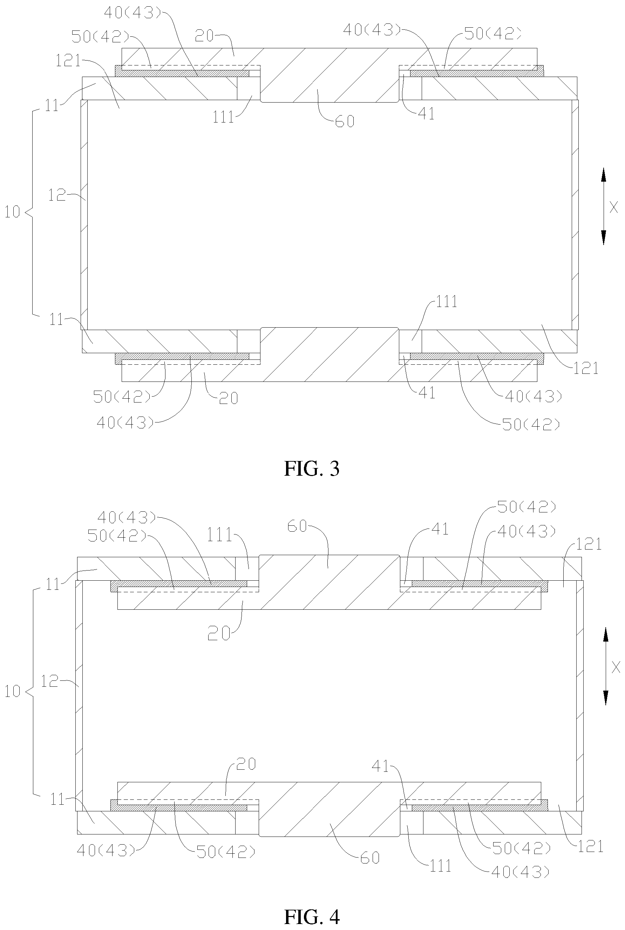

As shown in FIGs. 3 and 4, in an embodiment in which the housing 10 includes two first walls 11, the electrochemical apparatus 100 may include two conductive members 20, and the two conductive members 20 respectively cover the first through holes 111 of the two first walls 11, with each first wall 11 insulated from the corresponding conductive member 20 through the insulating member 40. The positive electrode tab and the negative electrode tab may be electrically connected to the two conductive members 20 respectively, so the two conductive members 20 respectively lead out the two opposite polarities of the electrode assembly 30, and the two conductive members 20 respectively form the positive electrode and the negative electrode of the electrochemical apparatus 100. In this way, the electrochemical apparatus 100 charges and discharges through the positive electrode and the negative electrode.

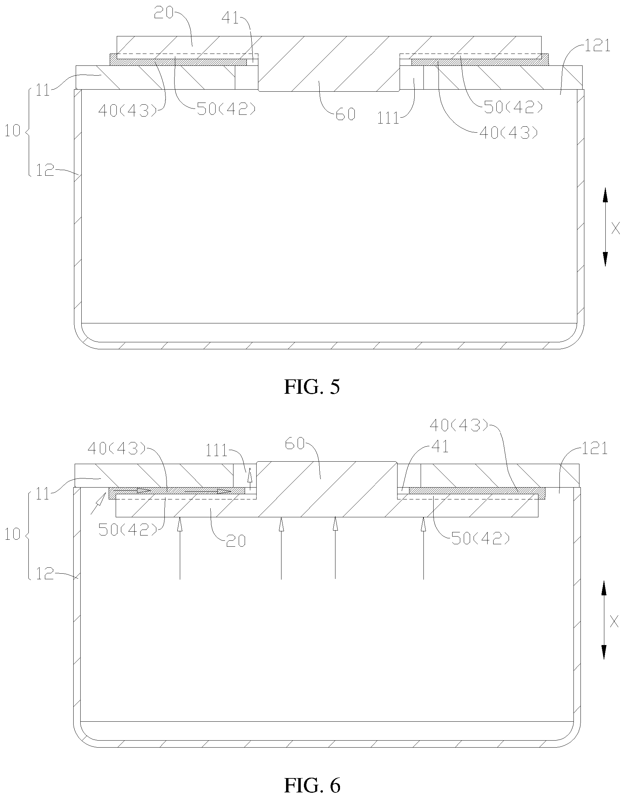

As shown in FIGs. 5 and 6, in an embodiment in which the electrochemical apparatus 100 includes one conductive member 20 and one first wall 11, the conductive member 20 is arranged on the first wall 11 of the housing 10 in an insulated manner. One of the positive electrode tab and the negative electrode tab is electrically connected to the conductive member 20, and the other one is electrically connected to the housing 10, so that the conductive member 20 and the housing 10 respectively lead out the two opposite polarities of the electrode assembly 30, and the conductive member 20 and the housing 10 respectively form the positive electrode and the negative electrode of the electrochemical apparatus 100. In this way, the electrochemical apparatus 100 charges and discharges through the positive electrode and the negative electrode. The positive electrode tab and the negative electrode tab are respectively located at two opposite ends of the electrode assembly 30, which reduces the risk of internal short circuit of the electrochemical apparatus 100. The housing 10 is made of metal, so the housing 10 has good structural strength and heat resistance. The material of the housing 10 may be determined according to the polarity of a tab electrically connected to it. If the positive electrode tab is electrically connected to the housing 10, the housing 10 may be made of aluminum. If the negative electrode tab is electrically connected to the housing 10, the housing 10 may be made of stainless steel or nickel.

The convex portion 50 may be provided on only a surface of the conductive member 20 facing the first wall 11, and the convex portion 50 protrudes from the surface of the conductive member 20 facing the first wall 11 along the first direction X towards the first wall 11. The convex portion 50 may alternatively be provided on only a surface of the first wall 11 facing the conductive member 20, and the convex portion 50 protrudes from the surface of the first wall 11 facing the conductive member 20 along the first direction X towards the conductive member 20. Alternatively, the convex portion 50 may be provided on each of the surface of the first wall 11 facing the conductive member 20 and the surface of the conductive member 20 facing the first wall 11.

The insulating member 40 is provided between the first wall 11 and the conductive member 20, and along the first direction X, the insulating member 40 and the convex portion 50 overlap, so that the convex portion 50 can act on the insulating member 40 in the first direction X. In this way, the convex portion 50 can damage the insulating member 40.

It should be noted that the dashed lines in the figures of this application indicate the surface of the conductive member 20 facing the first wall 11 in the first direction X.

The convex portion 50 is provided on the surface of the conductive member 20 facing the first wall 11 and/or the surface of the first wall 11 facing the conductive member 20, so that when the internal pressure of the electrochemical apparatus 100 reaches a threshold, the convex portion 50 can damage the insulating member 40 that acts as an insulating seal between the conductive member 20 and the first wall 11, and support between the first wall 11 and the conductive member 20. In this way, a channel communicating the inside and outside of the housing 10 is formed between the conductive member 20 and the first wall 11, and the gas inside the housing 10 can be discharged to the outside of the housing 10 through the channel, which achieves pressure relief of the electrochemical apparatus 100, reduces the risk of safety accidents caused by thermal runaway of the electrochemical apparatus 100, and improves the safety performance of the electrochemical apparatus 100. The foregoing solution can achieve pressure relief when the electrochemical apparatus 100 is in thermal runaway without providing a pressure relief mechanism (for example, a common explosion-proof valve or notching on the housing) on the housing 10. Therefore, the integrity of the structure of the housing 10 is not compromised, so as to ensure the structural strength of the housing 10, further improving the safety performance of the electrochemical apparatus 100, while also increasing the space utilization rate of the electrochemical apparatus 100 and increasing the energy density.

In some embodiments, as shown in FIGs. 1 to 6, the electrochemical apparatus 100 further includes a body portion 60, where the body portion 60 is electrically connected to the conductive member 20. The conductive member 20 protrudes radially from the first through hole 111 to the outer periphery of the body portion 60. The conductive member 20 and the body portion 60 may be separately arranged and then connected as an integral structure through welding, bonding, or the like, to achieve electrical connection between the conductive member 20 and the body portion 60. The conductive member 20 and the body portion 60 may alternatively be integrally formed through, for example, stamping or casting. The conductive member 20 and the body portion 60 together form a pole of the electrochemical apparatus 100. The body portion 60 passes through the first through hole 111 and the second through hole 41. There is a gap between an outer peripheral surface of the body portion 60 and a wall of the first through hole 111, and there is a gap between an outer peripheral surface of the body portion 60 and a wall of the second through hole 41, so as to facilitate the discharge of gas inside the electrochemical apparatus 100.

In this embodiment, the conductive member 20 may be a disc structure, and the body portion 60 may be a cylindrical structure. In some other embodiments, the conductive member 20 may alternatively be other structures, for example, the conductive member 20 is a rectangular or hexagonal structure. The body portion 60 may alternatively be other structures, for example, the body portion 60 is a cuboid or hexagonal prism.

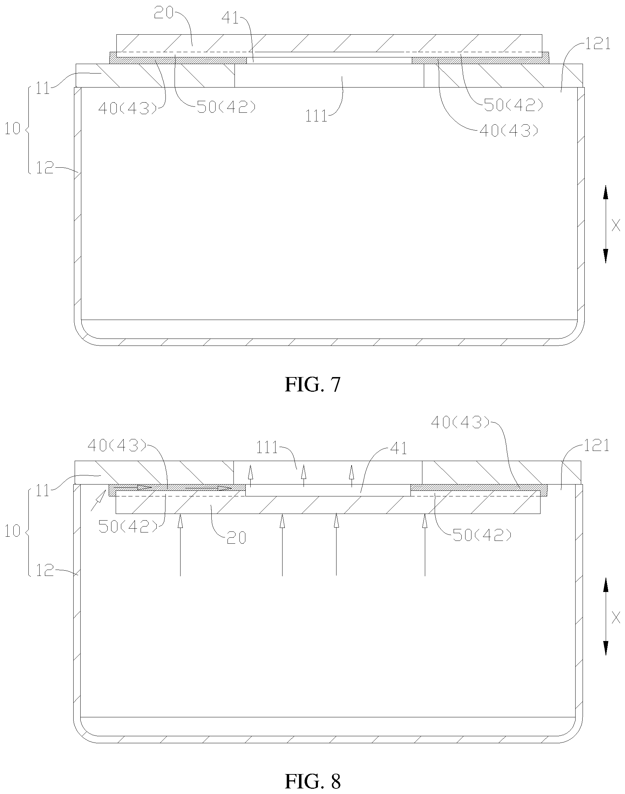

It should be noted that the body portion 60 is not a necessary component. As shown in FIGs. 7 and 8, the planar conductive member 20 may also serve as the pole of the electrochemical apparatus 100.

As shown in FIGs. 3 and 5, the conductive member 20 may be located on the outside of the first wall 11, that is, both the conductive member 20 and the insulating member 40 are located outside the housing 10, and the body portion 60 sequentially passes through the second through hole 41 and the first through hole 111. The conductive member 20 may be electrically connected to the electrode assembly 30 through the body portion 60, and the conductive member 20 located outside the housing 10 may be connected to an electric device, a charging device, or the like. In this embodiment, the body portion 60 may extend to a side of the first wall 11 facing away from the insulating member 40, so that the body portion 60 is electrically connected to a tab of the electrode assembly 30. Certainly, an end of the body portion 60 facing away from the conductive member 20 may alternatively be located within the first through hole 111. In an embodiment in which the conductive member 20 may be located on the outside of the first wall 11 and the body portion 60 is not connected to the conductive member 20 (as shown in FIG. 7), a surface of the conductive member 20 facing the first wall 11 may be connected to the tab of the electrode assembly 30, and the surface of the conductive member 20 facing away from the first wall 11 may be connected to an electric device, a charging device, or the like.

As shown in FIGs. 4 and 6, the conductive member 20 may be located on the inside of the first wall 11, that is, both the conductive member 20 and the insulating member 40 are located inside the housing 10, and the body portion 60 sequentially passes through the second through hole 41 and the first through hole 111. The conductive member 20 is electrically connected to the electrode assembly 30. The body portion 60 extends from the inside of the housing 10 to the outside of the housing 10, and the body portion 60 may be connected to an electric device, a charging device, or the like. In this embodiment, the body portion 60 may extend to the side of the first wall 11 facing away from the insulating member 40, so as to facilitate the connection of the body portion 60 with an electric device, a charging device, or the like. Certainly, an end of the body portion 60 facing away from the conductive member 20 may alternatively be located within the first through hole 111.

In an embodiment in which the conductive member 20 may be located on the inside of the first wall 11 and the body portion 60 is not connected to the conductive member 20 (as shown in FIG. 8), an electrical connection portion of an electric device, a charging devices, or the like may pass through the first through hole 111 and the second through hole 41 to connect to the surface of the conductive member 20 facing the first wall 11, and the surface of the conductive member 20 facing away from the first wall 11 may be connected to a tab of the electrode assembly 30.

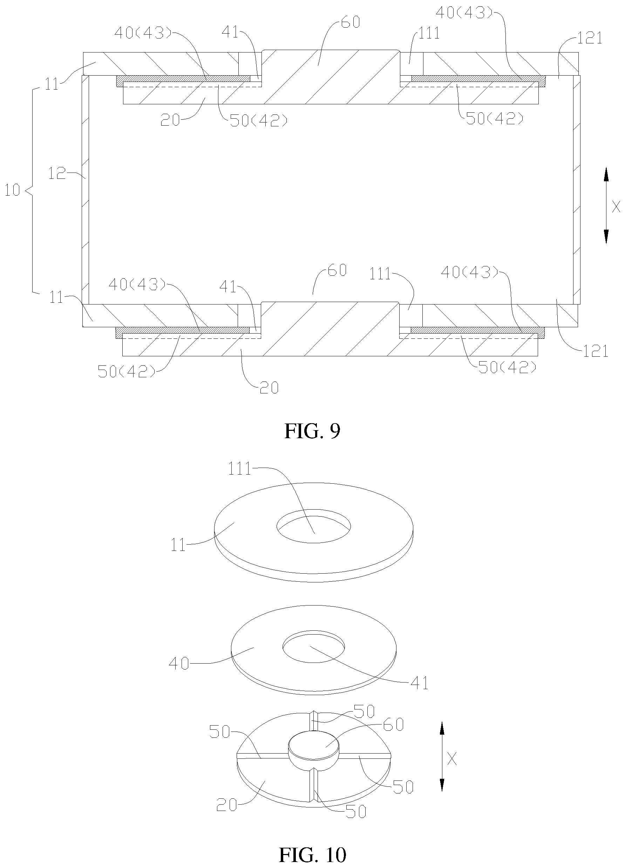

In an embodiment in which the electrochemical apparatus 100 has two first walls 11 and two conductive members 20. As shown in FIG. 9, along the first direction X, the two first walls 11 may be arranged oppositely, one conductive member 20 may be located on the outside of the first wall 11, and the other conductive member 20 is located on the inside of the first wall 11.

As shown in FIG. 10, in some embodiments, the convex portion 50 is arranged on a surface of the conductive member 20 facing the first wall 11.

In the first direction X, the surface of the conductive member 20 facing the first wall 11 is provided with the convex portion 50. The convex portion 50 arranged on the conductive member 20 may be provided in one or plurality. In an embodiment in which a plurality of convex portions 50 are arranged on the conductive member 20, the plurality of convex portions 50 are spaced apart from each other along a circumferential direction of the first through hole 111, and a gap may be formed between two adjacent convex portions 50.

In an embodiment in which the conductive member 20 is connected to the body portion 60, one end of the convex portion 50 in its extending direction may be connected to an outer peripheral surface of the body portion 60, and the convex portion 50 extends from the outer peripheral surface of the body portion 60 to an outer peripheral surface of the conductive member 20. Certainly, the convex portion 50 and the body portion 60 may alternatively be unconnected, and any position of the convex portion 50 is spaced apart from the outer peripheral surface of the body portion 60.

The convex portion 50 is arranged on the surface of the conductive member 20 facing the first wall 11, which makes the manufacturing and forming of the convex portion 50 more convenient, because the conductive member 20 is formed separately and has relatively high flexibility in size and a relatively simple structure, and the processing convenience and processing cost of providing the convex portion 50 on the surface of the convex portion 50 facing the first wall 11 is relatively low, thereby reducing the overall cost of the electrochemical apparatus 100.

In an embodiment in which the convex portion 50 is arranged on the conductive member 20, the convex portion 50 and the conductive member 20 may be separately arranged and then connected as an integral structure through welding, bonding, or the like.

Certainly, the conductive member 20 and the convex portion 50 may alternatively be integrally formed. It can be understood that the conductive member 20 and the convex portion 50 are formed using an integral forming process, such as stamping, milling, or casting. The conductive member 20 and the convex portion 50 are integrally formed, and the convex portion 50 may be arranged on the conductive member 20 in a simple and convenient manufacturing method, and the strength of overall structure formed by the conductive member 20 and the convex portion 50 is better.

In some embodiments, the electrochemical apparatus 100 includes a plurality of convex portions 50, where the plurality of convex portions 50 are spaced apart from each other around the first through hole 111.

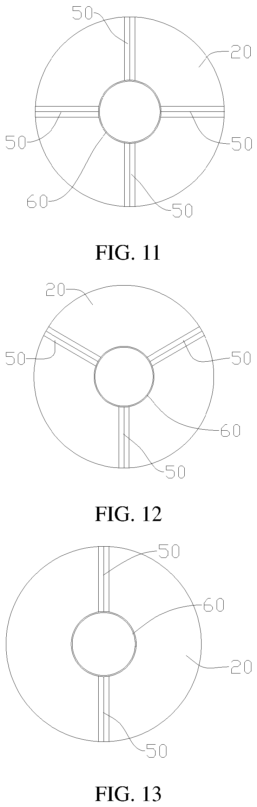

Preferably, the plurality of convex portions 50 may be evenly spaced apart from each other around the first through hole 111. After the insulating member 40 is damaged, the plurality of convex portions 50 can jointly support the conductive member 20 and the first wall 11, and make the conductive member 20 and the first wall 11 evenly stressed, which enhances the stability of the channel, and the formed channel is more evenly distributed, which improves the safety of the pressure relief process. Certainly, the plurality of convex portions 50 may alternatively be unevenly spaced apart from each other around the first through hole 111. FIG. 11 shows a case in which the surface of the conductive member 20 facing the first wall 11 is provided with four convex portions 50, and the four convex portions 50 are evenly spaced apart from each other around the first through hole 111. FIG. 12 shows a case in which the surface of the conductive member 20 facing the first wall 11 is provided with three convex portions 50, and the three convex portions 50 are evenly spaced apart from each other around the first through hole 111. FIG. 13 shows a case in which the surface of the conductive member 20 facing the first wall 11 is provided with two convex portions 50, and the two convex portions 50 are arranged on two opposite sides of the body portion 60 in a direction perpendicular to the first direction X.

The plurality of convex portions 50 are spaced apart from each other around the first through hole 111, so when the internal pressure of the electrochemical apparatus 100 reaches a threshold, the plurality of convex portions 50 jointly damage the insulating member 40, and the plurality of convex portions 50 can jointly support the conductive member 20 and the first wall 11, so that the conductive member 20 and the first wall 11 are more evenly stressed, which enhances the stability of the formed channel, and facilitates quick and stable pressure relief.

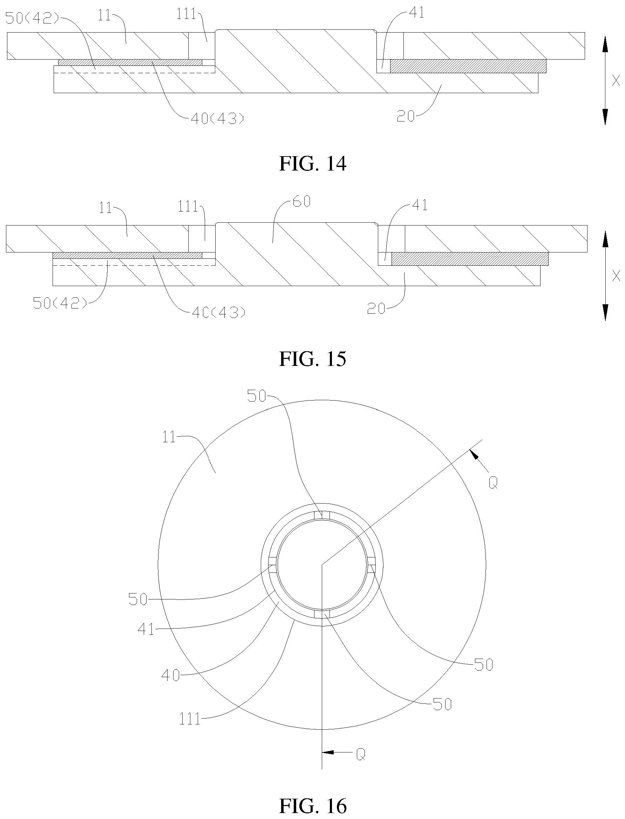

To ensure that the insulating member 40 can be completely damaged along the radial direction of the first through hole 111, a channel extending radially along the first through hole 111 is formed. Therefore, as shown in FIG. 14 and 15, in some embodiments, an end of the convex portion 50 close to the first through hole 111 extends beyond a wall of the second through hole 41, and an end of the convex portion 50 far away from the first through hole 111 extends beyond an outer edge of the insulating member 40 or is flush with the outer edge of the insulating member 40. FIG. 14 shows a case in which one end of the convex portion 50 far away from the first through hole 111 extends beyond the outer edge of the insulating member 40. FIG. 15 shows a case in which one end of the convex portion 50 far away from the first through hole 111 is flush with the outer edge of the insulating member 40.

The convex portion 50 has two ends along its extending direction, with one end being closer to the first through hole 111 in the radial direction of the first through hole 111 compared to the other end.

The end of the convex portion 50 close to the first through hole 111 extends beyond the wall of the second through hole 41, and the end of the convex portion 50 far away from the first through hole 111 extends beyond the outer edge of the insulating member 40 or is flush with the outer edge of the insulating member 40, so that after the convex portion 50 damages the insulating member 40, a channel communicating the inside and outside of the housing 10 along a radial direction of the first through hole 111 is formed between the conductive member 20 and the first wall 11, which facilitates quicker and smoother pressure relief and reduces the risk of safety accidents caused by thermal runaway of the electrochemical apparatus 100.

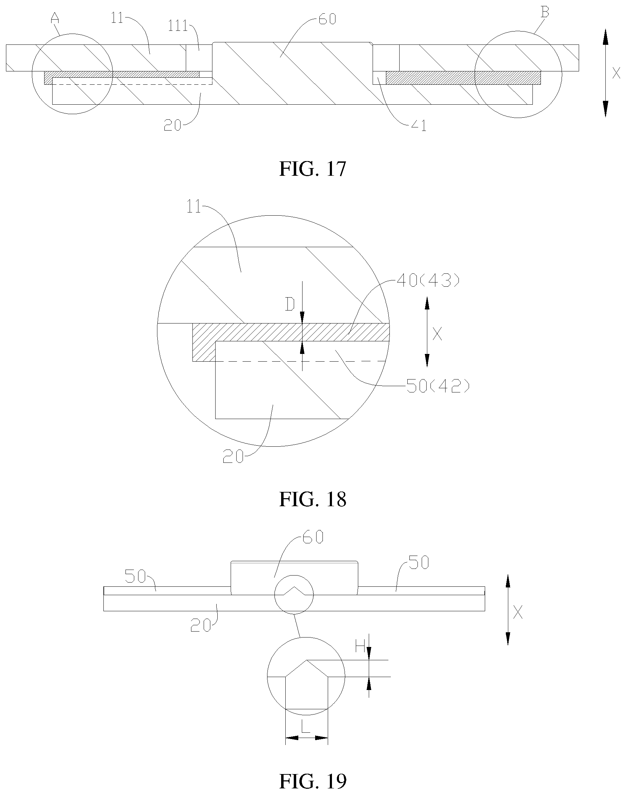

In some other embodiments, one end of the convex portion 50 far away from the first through hole 111 may also be covered by the insulating member 40, that is, the outer edge of the insulating member 40 extends beyond one end of the convex portion 50 far away from the first through hole 111 (as shown in FIGs. 17 and 18).

There are various ways for the convex portion 50 to damage the insulating member 40. For example, the first wall 11 or the conductive member 20 is subjected to force, causing the first wall 11 and the conductive member 20 to move towards each other. During the process of the first wall 11 and the conductive member 20 moving closer, the convex portion 50 squeezes the insulating member 40 until the convex portion 50 breaks the insulating member 40 in the first direction X. The convex portion 50 can support between the first wall 11 and the conductive member 20, so that the insulating member 40 forms into a discontinuous structure in the circumferential direction of the first through hole 111. The convex portion 50 can keep the insulating member 40 in a discontinuous state in the circumferential direction of the first through hole 111. Along the circumferential direction of the first through hole 111, the gap between the convex portion 50 and the insulating member 40 is the channel, and the gas inside the electrochemical apparatus 100 can be discharged from the gap between the convex portion 50 and the insulating member 40 in the circumferential direction of the first through hole 111. In this embodiment, the convex portion 50 may be made of insulating material or conductive material.

In some other embodiments, the electrode assembly 30 includes a first tab 31 and a second tab 32 with opposite polarities, where the first tab 31 is electrically connected to the conductive member 20, and the second tab 32 is electrically connected to the housing 10; and the convex portion 50 is configured to form a channel, communicating the inside and outside of the housing 10, between the conductive member 20 and the first wall 11 after the insulating member 40 melts.

The first tab 31 and the second tab 32 are a positive electrode tab and a negative electrode tab respectively. The convex portion 50 may be made of conductive material.

The first wall 11 or the conductive member 20 is subjected to force, causing the first wall 11 and the conductive member 20 to move towards each other. During the process of the first wall 11 and the conductive member 20 moving closer, the convex portion 50 squeezes the insulating member 40 until the convex portion 50 breaks the insulating member 40 in the first direction X. The convex portion 50 can support between the first wall 11 and the conductive member 20, and the conductive member 20 and the first wall 11 are electrically connected through the convex portion 50, to be specific, the positive electrode and the negative electrode of the electrochemical apparatus 100 are electrically connected, causing a short circuit in the electrochemical apparatus 100. The temperature of the short-circuited electrochemical apparatus 100 rises rapidly, and the high temperature causes the insulating member 40 to melt. The melted insulating member 40 is flowable, and the melted insulating member 40 flows non-directionally to form a channel between the first wall 11 and the conductive member 20, or the melted insulating member 40 is squeezed to the outside of the housing 10 by the internal pressure of the electrochemical apparatus 100, forming a channel between the first wall 11 and the conductive member 20. For example, as shown in FIG. 6, the conductive member 20 is located inside the housing 10, and the conductive member 20 covers the first through hole 111 from the side of the first wall 11 facing the electrode assembly 30, which can reduce the overall structure of the electrochemical apparatus 100. The internal pressure of the electrochemical apparatus 100 will drive the conductive member 20 to move towards the first wall 11, on the side of the conductive member 20 facing away from the insulating member 40. The convex portion 50 squeezes the insulating member 40 until the convex portion 50 breaks the insulating member 40. The housing 10 and the conductive member 20 are electrically connected through the convex portion 50, causing a short circuit in the electrochemical apparatus 100. The convex portion 50 supports between the first wall 11 and the conductive member 20, preventing the conductive member 20 from further approaching the first wall 11. Thus, the internal pressure of the electrochemical apparatus 100 can squeeze the melted insulating member 40 from between the first wall 11 and the conductive member 20 to the second through hole 41, the first through hole 111, and finally to the outside of the housing 10 (the direction of the hollow arrows in FIG. 6 may be a direction in which the melted insulating member 40 is squeezed out and a direction in which the internal pressure of the electrochemical apparatus 100 is relieved).

The first tab 31 is electrically connected to the conductive member 20, and the second tab 32 is electrically connected to the housing 10, so that the conductive member 20 and the housing 10 respectively form two electrodes of the electrochemical apparatus 100 with opposite polarities. When the internal pressure of the electrochemical apparatus 100 increases to a threshold, the convex portion 50 damages the insulating member 40, causing a short circuit in the electrochemical apparatus 100. The temperature of the short-circuited electrochemical apparatus 100 rises rapidly, and the high temperature causes the insulating member 40 to melt. The locally melted insulating member 40 flows to two sides of the convex portion 50 under the action of the convex portion 50 and the gas inside the housing 10, to form a channel with a larger cross-section for pressure relief, which improves the pressure relief efficiency during thermal runaway of the electrochemical apparatus 100. Meanwhile, the top of the convex portion 50 (if the convex portion 50 is arranged on the conductive member 20, the top of the convex portion 50 refers to the end of the convex portion 50 facing away from the conductive member 20, and if the convex portion 50 is arranged on the first wall 11, the top of the convex portion 50 refers to the end of the convex portion 50 facing away from the first wall 11) is inevitably uneven at the microscopic level. As long as a higher part of the top of the convex portion 50 becomes in contact with the housing, a local short circuit and heat release can occur, and in turn may cause the insulating member 40 around the convex portion 50 to melt before the entire insulating member 40 is completely damaged by the convex portion 50, which accelerates the formation of the pressure relief channel, improves the sensitivity of the electrochemical apparatus 100 to abnormal increases in the internal pressure, reduces the risk of safety accidents caused by thermal runaway of the electrochemical apparatus 100, and improves the safety performance of the electrochemical apparatus 100. According to different battery design requirements, the main effect of forming a pressure relief channel can be achieved by causing the insulating member 40 around the convex portion to melt through a local short circuit. For example, when the insulating member 40 is made of a material with high tear resistance and/or the top shape of the convex portion 50 is not sharp, the pressure required to damage the insulating member 40 by the convex portion 50 alone is too high to ensure safety. In this case, the convex portion 50 causes a local short circuit between the conductive member 20 and the housing 10 to release heat, so that the electrochemical apparatus 100 can form a pressure relief channel under a relatively low internal pressure, thereby achieving safe pressure relief.

Moreover, the way of generating local short-circuit heat release by making the first wall 11 and the conductive member 20 short-circuit through the convex portion 50 can not only greatly improve the pressure relief sensitivity of the electrochemical apparatus 100 to abnormal increase in internal pressure and enhance safety, but also, when the end of the convex portion 50 far away from the first through hole 111 does not exceed the outer edge of the insulating member 40 or is flush with the outer edge of the insulating member 40 (as shown in FIG. 6), make the insulating member 40 that is not cut off by the convex portion 50 melt quickly through local short-circuit heat release, thereby rapidly forming a pressure relief channel, reducing the difficulty in controlling the size of the insulating member 40 and the conductive member 20, and lowering the production cost.

As shown in FIGs. 16 and 17, in some embodiments, the convex portion 50 is formed with a groove 42 on a surface of the insulating member 40 along the first direction X to form a weak portion 43, the convex portion 50 is inserted into the groove 42 and abuts against the weak portion 43, and the convex portion 50 is configured to break the weak portion 43 when the internal pressure of the housing 10 reaches a threshold, so as to form a pressure relief channel or make the conductive member 20 short-circuit with the housing 10.

The weak portion 43 is a position on the insulating member 40 with a smaller thickness and opposite the convex portion 50. The weak portion 43 may be formed by providing a groove 42 on the insulating member 40. The groove 42 may be formed before the insulating member 40 is assembled between the first wall 11 and the conductive member 20, and the groove 42 is formed on the surface of the insulating member 40 facing the convex portion 50 through a related grooving process so as to reduce the thickness of the insulating member 40 at a position corresponding to the groove 42. In this embodiment, the thickness of the insulating member 40 at the position corresponding to the groove 42 is smaller than thicknesses of the insulating member 40 at other positions. After the insulating member 40 is assembled between the first wall 11 and the conductive member 20, the convex portion 50 is inserted into the groove 42. The convex portion 50 and the groove 42 are arranged in a one-to-one correspondence. The groove 42 may be a triangular groove 42, a rectangular groove 42, or the like.

In an embodiment in which the convex portion 50 is arranged on only the surface of the conductive member 20 facing the first wall 11, the groove 42 may be arranged on only the surface of the insulating member 40 facing the conductive member 20.

In an embodiment in which the convex portion 50 is arranged on only the surface of the first wall 11 facing the conductive member 20, the groove 42 may be arranged on only the surface of the insulating member 40 facing the first wall 11.

In an embodiment in which the convex portion 50 is arranged on both of the surface of the conductive member 20 facing the first wall 11 and the surface of the first wall 11 facing the conductive member 20, the groove 42 may be arranged on both the surface of the insulating member 40 facing the conductive member 20 and the surface of the insulating member 40 facing the first wall 11. In an embodiment in which the convex portion 50 is arranged on both the surface of the conductive member 20 facing the first wall 11 and the surface of the first wall 11 facing the conductive member 20, along the first direction X, projections of the convex portion 50 on the conductive member 20 and the convex portion 50 on the first wall 11 on the insulating member 40 may overlap, and the grooves 42 arranged on both sides of the insulating member 40 may also overlap. In an embodiment in which the convex portion 50 is arranged on both the surface of the conductive member 20 facing the first wall 11 and the surface of the first wall 11 facing the conductive member 20, along the first direction X, projections of the convex portion 50 on the conductive member 20 and the convex portion 50 on the first wall 11 on the insulating member 40 may be completely staggered, that is, not overlapped, and the grooves 42 arranged on both sides of the insulating member 40 may also be staggered.

The groove 42 may be formed after the insulating member 40 is assembled between the first wall 11 and the conductive member 20, as the insulating member 40 is squeezed by the first wall 11 and the conductive member 20, and the convex portion 50 is embedded into the insulating member 40.

Arrangement of the weak portion 43 makes the insulating member 40 more easily broken by the convex portion 50, and enables timely short-circuiting of the electrochemical apparatus 100, so as to achieve timely pressure relief.

After the convex portion 50 breaks the insulating member 40, the convex portion 50 supports between the conductive member 20 and the first wall 11, the conductive member 20 and the housing 10 are short-circuited through the convex portion 50, the temperature of the electrochemical apparatus 100 rises rapidly, and the high temperature causes the insulating member 40 to melt. Thus, the convex portion supported between the conductive member 20 and the first wall 11 can form a channel, communicating the inside and outside of the housing 10, between the conductive member 20 and the first wall 11, or the convex portion 50 allows the melted insulating member 40 to be squeezed out from between the conductive member 20 and the first wall 11 by the gas inside the electrochemical apparatus 100, so that a channel between the conductive member 20 and the first wall 11 is formed, and the pressure is relieved through the channel, which reduces the risk of safety accidents caused by thermal runaway of the electrochemical apparatus 100, and improves the safety performance of the electrochemical apparatus 100.

When the internal pressure of the housing 10 reaches a threshold, the convex portion 50 breaks the weak portion 43, and the conductive member 20 and the housing 10 short-circuit through the convex portion 50 so as to achieve pressure relief of the electrochemical apparatus 100. This can achieve pressure relief during thermal runaway of the electrochemical apparatus 100 without the need to provide a pressure relief mechanism on the housing 10, thereby not compromising the integrity of the structure of the housing 10 and ensuring the structural strength of the housing 10.

As shown in FIG. 18, thickness of the weak portion 43 may be set according to actual needs. In some embodiments, the thickness of the weak portion 43 is D, satisfing 0.01 mm ≤ D ≤ 0.50 mm.

The thickness of the weak portion 43 refers to a size of the weak portion 43 in the first direction X. For example, D may be 0.02 mm, 0.03 mm, 0.05 mm, 0.08 mm, 0.10 mm, 0.15 mm, 0.20 mm, 0.25 mm, 0.30 mm, 0.35 mm, 0.40 mm, 0.45 mm, or the like.

If the thickness D of the weak portion 43 is too small, for example, less than 0.01 mm, the weak portion 43 is easily damaged by the convex portion 50 or the convex portion 50 easily causes a local short circuit between the conductive member 20 and the housing 10, making the electrochemical apparatus 100 too sensitive to internal pressure changes, resulting in performance waste; if the thickness D of the weak portion 43 is too large, for example, greater than 0.50 mm, the insulating member 40 between the top of the convex portion 50 and the first wall 11 of the housing 10 is too thick under normal conditions of the electrochemical apparatus 100, and the convex portion 50 may require extremely high pressure to completely damage the insulating member 40 or achieve a local short circuit, making the pressure threshold too high, which is inconducive to ensuring the safety of the electrochemical apparatus 100. The thickness D of the weak portion 43 satisfing 0.01 mm ≤ D ≤ 0.50 mm ensures that the weak portion 43 has good insulating performance and is also easily broken by the convex portion 50, thereby ensuring timely pressure relief when the internal pressure of the electrochemical apparatus 100 is too high.

In some embodiments, the convex portion 50 extends in a straight line or a curve on the surface of the first wall 11 facing the conductive member 20, that is, the convex portion 50 arranged on the surface of the first wall 11 facing the conductive member 20 may extend in a straight line or may extend in a curve. In some embodiments, the convex portion 50 extends in a straight line or a curve on the surface of the conductive member 20 facing the first wall 11, that is, the convex portion 50 arranged on the surface of the conductive member 20 facing the first wall 11 may extend in a straight line or may extend in a curve.

For example, the convex portion 50 extends radially in a straight line along the first through hole 111. For another example, the convex portion 50 extends along an S-shaped path.

The cross section of the convex portion 50 is a cross section of the convex portion 50 at any position in its extending direction. As shown in FIG. 17, in this embodiment, the cross section of the convex portion 50 is triangular. The cross section of the convex portion 50 is triangular, making the top of the convex portion 50 sharper and easier to break the insulating member 40.

In some other embodiments, the cross section of the convex portion 50 may alternatively be rectangular, semicircular, semi-elliptical, or the like.

Still referring to FIG. 17, in some embodiments, height of the triangular cross section of the convex portion 50 is H, and width of the triangular cross section of the convex portion 50 is L, satisfing 1/5 ≤ H/L ≤ 3.

The height of the convex portion 50 refers to a size of the convex portion 50 in the first direction X. For example, if the convex portion 50 is arranged on the surface of the conductive member 20 facing the first wall 11, the height of the convex portion 50 refers to the size of the convex portion 50 protruding from the surface of the conductive member 20 facing the first wall 11 along the first direction X.

The width of the convex portion 50 refers to a size of the cross section of the convex portion 50 in a direction perpendicular to the first direction X.

H/L may be 2/5, 4/5, 1, 1.2, 1.5, 1.7, 2, 2.3, 2.5, 2.7, or the like.

In an embodiment in which the cross section of the convex portion 50 is triangular, a larger H/L indicates a sharper edge of the convex portion 50 facing the first wall 11, and is more conducive to breaking the insulating member 40.

If H/L is too small, for example, less than 1/5, in a case in which the cross section of the convex portion 50 is triangular, the triangle as a whole is too flat and has a low sharpness, it is difficult for the convex portion 50 to pierce the insulating member 40, thus it is hard to form a smooth pressure relief channel; and if H/L is too large, for example, greater than 3, the cross section of the convex portion is too sharp, and the convex portion can pierce the insulating member 40 at a relatively low pressure; and due to the tip discharge effect, the convex portion 50 also more easily causes a local short circuit between the conductive member 20 and the first wall 11, resulting in pressure relief of the electrochemical apparatus 100 at a relatively low internal pressure and causing performance waste.

Therefore, 1/5 ≤ H/L ≤ 3 ensures that under reasonable internal pressure of the electrochemical apparatus 100, after the convex portion 50 damages the insulating member 40, the channel formed between the first wall 11 and the conductive member 20 can meet the pressure relief requirements of the electrochemical apparatus 100, which enables the electrochemical apparatus 100 to relieve pressure timely and quickly, and reduces the risk of safety accidents caused by thermal runaway of the electrochemical apparatus 100.

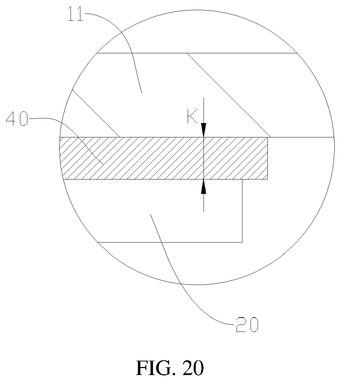

With reference to FIGs. 18, 19, and 20, in some embodiments, height of the convex portion 50 is H, and thickness of the insulating member 40 is K, satisfing 0.01 mm ≤ H < K.

The thickness of the insulating member 40 is a size of the insulating member 40 in the first direction X. In an embodiment in which the insulating member 40 has a groove 42, the thickness K of the insulating member 40 is thickness of a region of the insulating member 40 other than the position corresponding to the groove 42. The height H of the convex portion 50 is smaller than the thickness K of the insulating member 40, ensuring that the insulating member 40 at the position corresponding to the convex portion 50 can play an insulating role before the first wall 11 or the conductive member 20 is subjected to external force.

The height H of the convex portion 50 may be 0.02 mm, 0.05 mm, 0.07 mm, 0.10 mm, 0.15 mm, 0.17 mm, 0.20 mm, 0.25 mm, 0.27 mm, or the like.

The height H of the convex portion 50 and the thickness K of the insulating member 40 meet 0.01 mm ≤ H < K, so that the insulating member 40 has good insulating performance. Moreover, after the convex portion 50 breaks the insulating member 40, the convex portion 50 can support the first wall 11 and the conductive member 20 in the first direction X, so that a channel with a larger cross-sectional area for pressure relief is formed between the first wall 11 and the conductive member 20 to meet the pressure relief requirements.

An embodiment of this application further provides an electric device, where the electric device includes the electrochemical apparatus 100 according to any one of the foregoing embodiments. The electrochemical apparatus 100 is served as an energy-supplying component of the electric device to perform its own functions using the electric device.

The electric device may be but not limited to a mobile phone, a tablet computer, a notebook computer, an electric drill, an electric saw, an electric vehicle, an electric motorcycle, or an electric bicycle.

The electrochemical apparatus 100 provided in any embodiment mentioned above has better safety, and can improve the electrical safety of the electric device equipped with the electrochemical apparatus 100.

The foregoing embodiments are merely preferred embodiments, and are not intended to limit this application. Persons skilled in the art may modify or change this application. Any modification, equivalent replacement, and improvement made without departing from the spirit and principle of this application shall fall within the protection scope of this application.

## Claims

1. An electrochemical apparatus, comprising:
a housing, wherein the housing has a first wall, and the first wall is provided with a first through hole;
a conductive member, wherein the conductive member covers the first through hole;
an electrode assembly, wherein the electrode assembly is accommodated in the housing, the conductive member is electrically connected to the electrode assembly to lead out a polarity of the electrode assembly; and
an insulating member, wherein the insulating member is arranged between the conductive member and the first wall to insulate the conductive member from the housing, the insulating member has a second through hole, along a first direction, at least a part of a projection of the conductive member is located within both the first through hole and the second through hole, and the first direction is a thickness direction of the first wall; wherein
a surface of the first wall facing the conductive member and/or a surface of the conductive member facing the first wall is provided with a convex portion.

2. The electrochemical apparatus according to claim 1, wherein the convex portion is arranged on the surface of the conductive member facing the first wall.

3. The electrochemical apparatus according to claim 2, wherein the conductive member and the convex portion are integrally formed.

4. The electrochemical apparatus according to claim 1, wherein the electrochemical apparatus comprises a plurality of convex portions, wherein the plurality of convex portions are spaced apart from each other around the first through hole.

5. The electrochemical apparatus according to claim 1, wherein an end of the convex portion close to the first through hole extends beyond a wall of the second through hole, and an end of the convex portion far away from the first through hole extends beyond an outer edge of the insulating member or is flush with the outer edge of the insulating member.

6. The electrochemical apparatus according to any one of claims 1 to 5, wherein the electrode assembly comprises a first tab and a second tab with opposite polarities, wherein the first tab is electrically connected to the conductive member, and the second tab is electrically connected to the housing; and
the convex portion is configured to form a channel, communicating the inside and outside of the housing, between the conductive member and the first wall after the insulating member melts.

7. The electrochemical apparatus according to claim 6, wherein the convex portion is formed with a groove on a surface of the insulating member along the first direction to form a weak portion; and
the convex portion is inserted into the groove and abuts against the weak portion, wherein the convex portion is configured to break the weak portion when internal pressure of the housing reaches a threshold, so as to short-circuit the conductive member and the housing.

8. The electrochemical apparatus according to claim 7, wherein thickness of the weak portion is D, satisfing 0.01 mm ≤ D ≤ 0.5 mm.

9. The electrochemical apparatus according to claim 1, wherein the convex portion extends in a straight line or a curve on a surface of the first wall facing the conductive member and/or a surface of the conductive member facing the first wall, and a cross section of the convex portion is triangular.

10. The electrochemical apparatus according to claim 9, wherein height of the cross section of the convex portion is H, and width of the cross section of the convex portion is L,satisfing 1/5 ≤ H/L ≤ 3.

11. The electrochemical apparatus according to claim 1, wherein height of the convex portion is H, and thickness of the insulating member is K, satisfing 0.01 mm ≤ H < K.

12. An electric device, comprising the electrochemical apparatus according to any one of claims 1 to 11.
